# EUROPEAN PATENT APPLICATION

(11) **EP 2 390 078 A1**
(43) Date of publication of application: **30.11.2011**
(21) Application number: 10819100.8
(22) Date of filing: 09.09.2010
(51) Int. Cl.: B29C 47/14, B29C 47/06, D01D 5/32, B32B 7/02, B29L 11/00

(54) **DEVICE FOR PRODUCING A MULTILAYER OPTICAL WAVEGUIDE**

(30) Priority: 28.09.2009 RU 2009136391
(71) Applicant: Kiyko, Vladimir Veniaminovich, Moskovskaya obl. 142302 (RU); Everhost Investments Limited, 1097 Nicosia (CY)
(72) Inventor: The designation of the inventor has not yet been filed
(74) Representative: Engel, Christoph Klaus
(86) International application number: PCT/RU2010/000511
(87) International publication number: WO 2011/037494

(57) **Abstract**

The invention is intended for producing multilayer planar optical waveguides and, more specifically, for manufacturing blanks for multilayer optical discs. The device comprises a unit for supplying polymer materials with different refractive indices, and a die set in the form of the following series of plates, arranged one on top of the other in a vertical direction within a single housing: a distribution plate with supply ports; at least two die plates mounted with gaps therebetween; and a collection plate with an outlet port. The lateral surfaces of the die plates are flat and the outlet port of the collection plate is in the form of a slot. Furthermore, the device may additionally comprise a system for pressing the optical waveguide, which is arranged below the outlet port of the collection plate and is in the form of at least one pair of parallel horizontal cylindrical rollers which are capable of rotating simultaneously and synchronously in opposite directions.

## Description

### Pertinent art

The invention is related to the technique of manufacturing the polymer multilayer optical waveguides and it may be used for obtaining the blanks for production of multilayer optical disks intended for recording and storing the information.

### Prior art practice

Previously known is a device for obtaining a polymer multilayer optical waveguide on a substrate (USA patent No. 5317657, published 31.05.1994, B29C 47/00) including a reservoir filled with liquid polymer material and extruder connected with the reservoir and having a nozzle at its end. The device also includes a table with installed waveguide substrate, made so as to provide a possibility of programmable displacement in two mutually perpendicular directions, and a system controlling the distance from the extruder nozzle outlet port to the waveguide substrate. In this device, a liquid polymer material is fed under pressure from the reservoir to the substrate via the extruder nozzle and the substrate is displaced by the table over the assigned trajectory relative to the extruder. A drawback of this device is a necessity of application of substrate on which a waveguide is applied. When manufacturing the blanks of optical disks, availability of substrate having a considerable thickness, as compared with a ducting layer, results in limitation of a number of ducting layers possibly applied on it and in decreasing of potential volume of information that may be stored on the optical disk during its use. Besides, previously known device does not ensure a possibility of obtaining planar waveguides with a large number of layers a high consistency of their thickness on a large area, which is the obligatory condition of obtaining high-quality blanks for manufacturing multilayer optical disks.

The device used for obtaining the polymer multilayer optical fiber (RU patent claim No. 2160798, published 20.12.2000, G02B 6/18) is the closest one to the claimed invention by its technical essence and assumed as the prototype; it contains the unit supplying the polymer materials with different refraction indices and the extruder including a spinneret holder which is essentially a set of several modules arranged vertically one after another in a single casing and, besides, each module consists of one or several distributing plates with sequentially superimposed feeding channels, orifice plates and collection plate with a taper hole being essentially an outlet of each module. In each module, the orifice plates are arranged relative to one another with gaps connecting the feeding channels of distributing plates with a taper hole of collection plate and, besides, the lateral surface of the said gaps are made tapered. This device makes it possible to obtain high-quality optical fibers with a large number of constant-thickness layers. However, this prototype is intended for manufacturing the polymer multilayer fibers of round cross-section, only, and it cannot be used for production of multilayer planar waveguides necessary for obtaining the blanks of multilayer optical disks.

### Essence of invention

The purpose of this invention is to create a device for obtaining a multilayer planar optical waveguide.

The said technical result in the device for obtaining the multilayer optical waveguide containing the unit for supplying polymer materials with different refractive indices and the spinneret holder in the form of a distributing plate with supply ports arranged vertically in a single casing and sequentially superimposed, at least two orifice plates mounted with gaps there between and collection plate with outlet port is attained by the fact that the lateral surfaces of orifice plates are made flat and the outlet port of collection plate is made in the form of a slot.

Besides, the claimed device may additionally contain the optical waveguide crimping system installed under the outlet port of the collection plate, which contains at least one pair of parallel horizontally arranged cylindrical rollers which are capable of rotating simultaneously and synchronously in opposite directions and installed with respect to each other in such a manner that a distance between their cylindrical surfaces does not exceed the lateral dimension of outlet port of the collection plate.

Furthermore, the claimed device may additionally contain the optical waveguide irradiation system with a light beam having a wave length λ satisfying the condition 380 nm <λ< 550 nm.

In the claimed device, the unit for supplying the polymer materials contains at least two reservoirs accommodating the melts of polymer materials with different refraction indices. The outlet ports of the said reservoirs are conjugated with the inlet ports of the distributing plate, which are connected through feeding channels with the lateral gaps between the orifice plates. The lateral gaps between the orifice plates are made in such a manner that their thickness values decrease in the direction from the distributing plate to the collection plate. The layers of polymer materials arriving via the gaps between the orifice plates to slot-like outlet port of the collection plate form a monolithic-type slot jet.

A multilayer planar waveguide intended for obtaining the optical disk blank should have layers with different refraction indices and thickness values. Thereat, the thickness of light beam waveguide layers with a large refraction index should amount to several tens of microns and the thickness of information layers with a smaller refraction index should amount to several microns. On the outlet port of collection plate, a multilayer planar waveguide has the layers the thickness values of which considerably exceed the required values. To form the layers of adequate thickness, a multilayer planar waveguide is directed to the crimping system after it leaves the outlet port of collection plate. In the claimed device, this system is suggested to be made in the form of at least one pair parallel horizontally arranged cylindrical rollers installed with a gap so that they are capable of rotating simultaneously and synchronously in opposite directions. A monolithic-type slot jet with polymer layers of the required thickness is cooled (solidified) after the crimping system in the form of a multilayer optical waveguide and delivered to the die molding device of optical disk blanks. To speed up a solidification process, it is suggested that arranged at the crimping system outlet of the claimed device will be the optical waveguide irradiation system with a light beam having a wave length λ satisfying the condition 380 nm <λ< 550 nm.

### Brief description of drawing figures

The essence of invention is explained by the drawings where shown in Fig. 1 is the general view of the device for obtaining a multilayer planar optical waveguide; shown in Fig. 2 are two types of spinneret holders (vertical cross-section in Fig. 2a and horizontal cross-section in axonometric projection in Fig. 2b); presented in Fig. 3 is the orifice plate; shown in Fig. 4 are the upper and lower surfaces of the distributing plate and in shown in Fig. 5 is the collection plate.

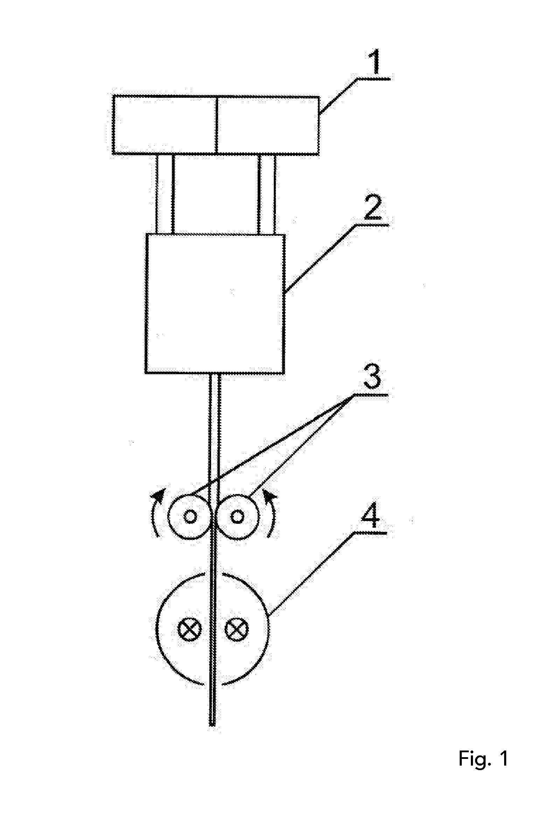

Presented in Fig. 1 are the unit for supplying the polymer materials with different refraction indices in the form of two reservoirs, spinneret holder 2, crimping system 3 and irradiation system 4.

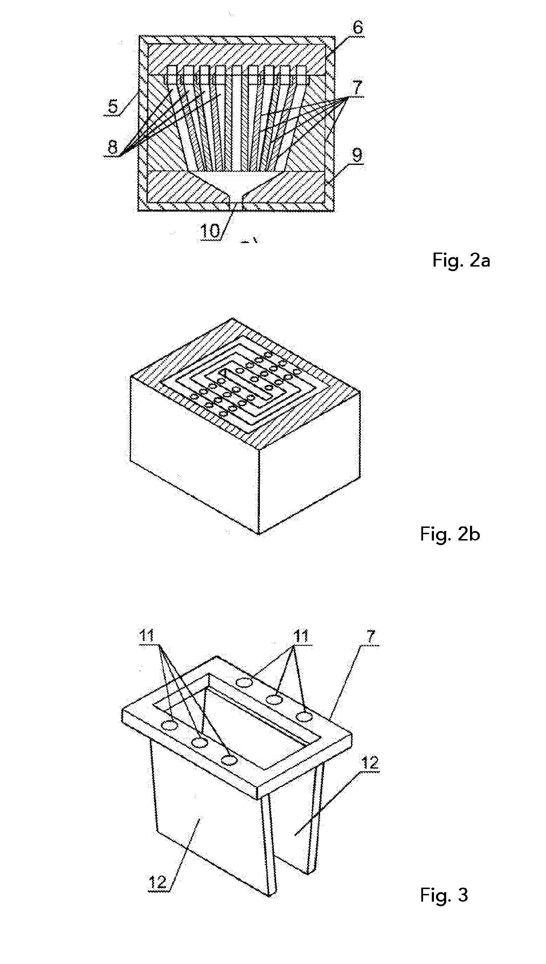

Shown in Fig. 2 are spinneret holder casing 5, distributing plate 6, orifice plates 7 installed with gaps 8, collection plate 9 with outlet port 10.

Shown in Fig. 3 are orifice plate 7 with by-pass ports 1 and flat lateral surfaces 12.

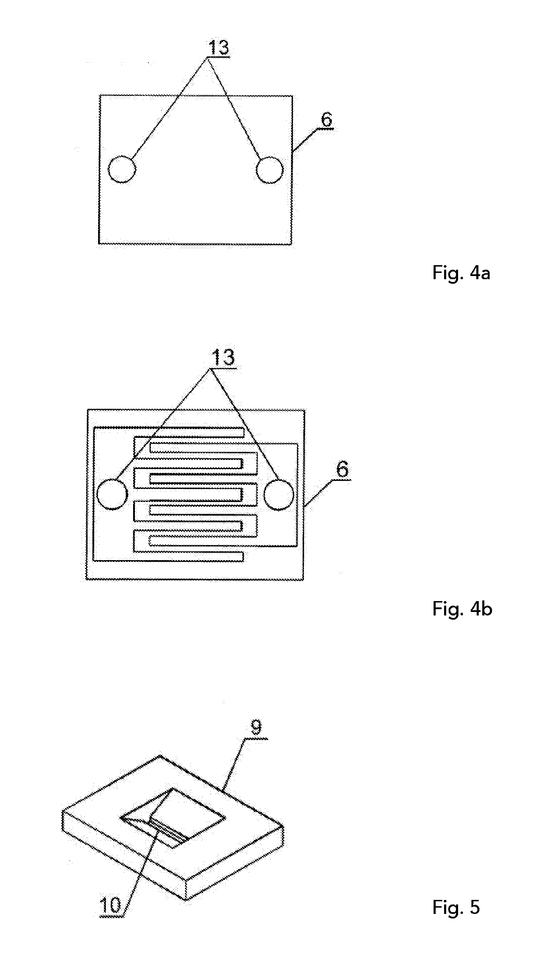

Presented in Fig. 4 is distributing plate 6 with supply ports 13 (Fig. 4a - view of upper surface of distributing plate 6; Fig. 4b - view of lower surface of distributing plate 6).

Shown in Fig. 5 is collection plate 9 with slot-like outlet port 10.

### Realization of invention

The claimed device operates as follows. From reservoirs of the unit supplying the polymer materials, the melts of polymer materials are furnished under pressure (with the help of auger, piston or inert gas pressure) to supply ports 13 of distributing plate 6 and then, the melts of polymer materials are supplied to the ducts on the lower plane of distributing plate 6 that are conjugated with lateral gaps 8 between sequentially superimposed orifice plates 7. Each separate orifice plate 7 is essentially an inverted blunt-nosed wedge with flat lateral surfaces 12 the upper portion of which has by-pass ports 11, which direct the melts of polymer materials to gaps 8 between orifice plates 7. When passing through lateral gaps 8 between the orifice plates, the flat layers of melts of polymer materials are uniformly crimped and aggregated with the help of outlet port 10 of collection plate 9. Furtheron, a multilayer planar optical waveguide is furnished into gap between the rollers of crimping system 3. The gap thickness between rollers is approximately twice as little as the thickness of outlet port 10 of collection plate 9. After passage of such a pair of rollers, the thickness of multilayer planar waveguide as a whole and the thickness of layers it is composed of get respectively decreased. Whenever necessary, crimping system 3 of the claimed device may include several similar sequentially installed pairs of rollers with a subsequent decrease of gap between rollers right up to obtaining the required thickness of multilayer optical waveguide. After passage of crimping system 3, the multilayer planar waveguide is furnished to irradiation system 4 consisting for instance of a pair of irradiators at a wave length λ satisfying the condition 380 nm <λ< 550 nm. During irrespective irradiation of the waveguide polymer layers, there occurs their expedited hardening.

When estimating the importance of invention for industrial use, it is necessary to point out that the claimed device ensures obtaining of a multilayer planar optical waveguide with a high quality of optical layers. Such waveguides may be used as blanks when manufacturing the multilayer optical disks intended for recording and storage of data bulks.

## Claims

1. A device for obtaining a multilayer optical waveguide containing a unit for supplying polymer materials with different refraction indices and a spinneret holder in the form of arranged vertically in a single casing and sequentially superimposed a distributing plate with supply ports, at least two loose mounted orifice plates and a collection plate with a outlet port that is distinguished by the fact that the lateral surfaces of orifice plates are made flat and the outlet port of the collection plate is made in the form of a slot.

2. The device for obtaining a multilayer optical waveguide according to claim 1, **characterized by** that the device additionally contains a optical waveguide crimping system installed under the outlet port of the collection plate, which includes at least one pair of parallel horizontal cylindrical rollers which are capable of rotating simultaneously and synchronously in opposite directions and installed relative to each other in such a manner that a distance between their cylindrical surfaces does not exceed the lateral dimension of outlet port of the collection plate.

3. The device for obtaining a multilayer optical waveguide according to claim 1, **characterized by** that the device additionally contains an optical waveguide irradiation system with a light beam having a wave length λ satisfying the condition 380 nm <λ< 550 nm.
